# EUROPEAN PATENT APPLICATION

(11) **EP 3 846 485 A1**
(43) Date of publication of application: **07.07.2021**
(21) Application number: 20192156.6
(22) Date of filing: 21.08.2020
(51) Int. Cl.: H04N 21/422

(54) **ELECTRONIC DEVICE AND DISPLAY METHOD OF ON-SCREEN-DISPLAY INTERFACE**

(30) Priority: 31.12.2019 TW 108148483
(71) Applicant: Giga-Byte Technology Co., Ltd., New Taipei City 231 (TW)
(72) Inventor: Liu, Chia-En, 231 New Taipei City (TW); Lin, Cheng Lung, 231 New Taipei City (TW); Chang, Shih-Pin, 231 New Taipei City (TW); Huang, Chih-Cheng, 231 New Taipei City (TW)
(74) Representative: Michalski Hüttermann & Partner Patentanwälte mbB

(57) **Abstract**

Displaying an on-screen-display (OSD) interface in an electronic device, wherein the electronic device comprises a display module, a display controller, and a host, the display method comprising:

utilizing the host to execute an application to render a display image, and to transmit the display image to the display controller through an image-transmission channel between the host and the display controller;

utilizing the host to collect a sound signal generated by the application running on the host, and to analyze the sound signal to obtain sound information corresponding to the sound signal;

utilizing the host to transmit the sound information to the display controller; and

utilizing the display controller to generate an on-screen-display pattern corresponding to the sound information, to overwrite a specific position of the display image with the OSD pattern to generate an output image, and to transmit the output image to the display module for displaying.

## Description

### CROSS REFERENCE TO RELATED APPLICATIONS

This Application claims priority of Taiwan Patent Application No. 108148483, filed on Dec. 31, 2019, the entirety of which is incorporated by reference herein.

### BACKGROUND OF THE INVENTION

### Field of the Invention

The invention relates to display apparatuses, and, in particular, to an electronic device and a display method of an on-screen-display (OSD) interface.

### Description of the Related Art

The display apparatuses that are currently on the market (e.g., TVs or computer monitors) mostly have on-screen-display (OSD) functions. Such OSD functions can, for example, display the OSD options for adjusting the picture quality on the display apparatus, and cover the displayed OSD options on other screens so that the user can adjust the OSD options instantly. In a conventional display apparatus, the user can call out the screen of the OSD options through the physical buttons, and the OSD options may include brightness, contrast, color, color temperature, etc. However, when a conventional display apparatus is connected to a host, the display apparatus can usually only receive image signals from the host and display these. That is, the application executed by the host is not able to control the OSD function in the display apparatus, nor is it able to interact with the OSD function.

### BRIEF SUMMARY OF THE INVENTION

A detailed description is given in the following embodiments with reference to the accompanying drawings.

In an exemplary embodiment, an electronic device is provided. The electronic device includes: a display module, a display controller, and a host. The display controller is configured to control displaying of the display module. The host is electrically connected to the display controller. The host executes an application to render a display image, and transmits the display image to the display controller through an image-transmission channel between the host and the display controller. The host collects a sound signal generated by the application running on the host, and analyzes the sound signal to obtain sound information corresponding to the sound signal. The host transmits the sound information to the display controller. The display controller generates an on-screen-display (OSD) pattern corresponding to the sound information, overwrites a specific position of the display image with the OSD pattern to generate an output image, and transmits the output image to the display module for displaying. In some embodiments, the sound information comprises an orientation, distance, and strength of the sound signal.

In some embodiments, the OSD pattern is located within a radar interface of an OSD interface of the display module. In some other embodiments, the OSD pattern is located around the inner edge of the display module.

In some embodiments, an operating system executed by the host comprises a dynamic-link library that is configured to collect the sound signal generated by the application executed by the host, and to analyze the sound signal to obtain the sound information corresponding to the sound signal.

In some embodiments, the host executes a sound-collecting program and a reporting program, and the sound-collecting program is configured to collect the sound signal generated by the application executed by the host, and to analyze the sound signal to obtain the sound information corresponding to the sound signal, and the reporting program transmits the sound information generated by the sound-collecting program to the display controller through a data-transmission channel between the host and the display controller.

In some embodiments, the display controller converts the orientation, distance, and strength of the sound signal into corresponding coordinates and size of an acoustic-positioning point in the radar interface, reads the OSD pattern of the acoustic-positioning point from firmware stored in a storage unit of the electronic device, and overwrites a position of the corresponding coordinates of the radar interface in the display image with the OSD pattern.

In another exemplary embodiment, a display method of an on-screen-display (OSD) interface for use in an electronic device is provided. The electronic device comprises a display module, a display controller, and a host. The display method includes the following steps: utilizing the host to execute an application to render a display image, and to transmit the display image to the display controller through an image-transmission channel between the host and the display controller; utilizing the host to collect a sound signal generated by the application running on the host, and to analyze the sound signal to obtain sound information corresponding to the sound signal; utilizing the host to transmit the sound information to the display controller; and utilizing the display controller to generate an on-screen-display pattern corresponding to the sound information, to overwrite a specific position of the display image with the OSD pattern to generate an output image, and to transmit the output image to the display module for displaying.

### BRIEF DESCRIPTION OF THE DRAWINGS

The invention can be more fully understood by reading the subsequent detailed description and examples with references made to the accompanying drawings, wherein:
FIG. 1 is a block diagram of an electronic device in accordance with an embodiment of the invention;
FIGs. 2A and 2B are diagrams of connection between the host and display apparatus in the electronic device in accordance with an embodiment of the invention;
FIG. 3A is a diagram of an OSD interface in accordance with an embodiment of the invention;
FIG. 3B is a diagram of an OSD interface in accordance with another embodiment of the invention; and
FIG. 4 is a flow chart of a display method of an OSD interface in accordance with an embodiment of the invention.

### DETAILED DESCRIPTION OF THE INVENTION

The following description is made for the purpose of illustrating the general principles of the invention and should not be taken in a limiting sense. The scope of the invention is best determined by reference to the appended claims.

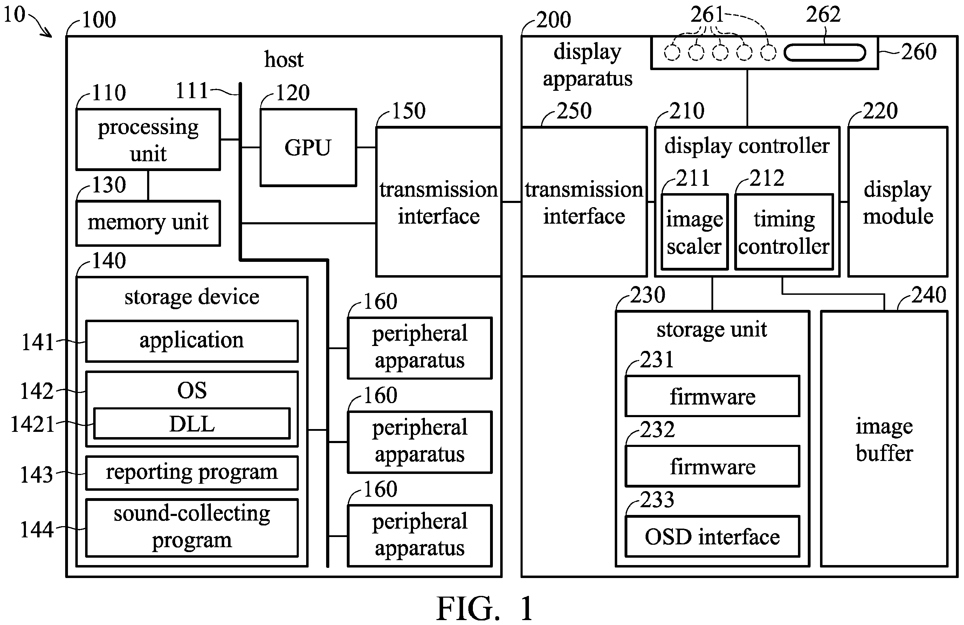

FIG. 1 is a block diagram of an electronic device in accordance with an embodiment of the invention. The electronic device 10, for example, may be a personal computer, laptop, or server equipped with a display apparatus. As illustrated in FIG. 1, the electronic device 10 includes a host 100 and a display apparatus 200, wherein the host 100 has a signal connection to the display apparatus 200. For example, the host 100 may include a processing unit 110, a graphics processing unit (GPU) 120, a memory unit 130, a storage device 140, one or more transmission interfaces 150, and one or more peripheral apparatuses 160. The processing unit 110, graphics processing unit 120, memory unit 130, storage device 140, transmission interfaces 150, and peripheral apparatuses 160 may be coupled to each other via the system bus 111. The processing unit 110, for example, may be a central processing unit (CPU), a general-purpose processor, etc., but the invention is not limited thereto. The graphics processing unit 120, for example, may be a graphics processing unit on a video adapter or integrated into the processing unit 110. The graphics processing unit 120 may perform graphics processing of the application executed by the processing unit 110 to generate an image signal including one or more images, and transmit the image signal to the display apparatus 200 through one of the transmission interfaces 150 (e.g., the HDMI interface or DisplayPort interface).

The memory unit 130 may be a random access memory such as a static random access memory (SRAM) or a dynamic random access memory (DRAM), but the invention is not limited thereto. The storage device 140 may be a non-volatile memory such as a hard-disk drive, a solid-state disk (SSD), a flash memory, or a read-only memory (ROM), but the invention is not limited thereto.

The transmission interface 150 may include wired transmission interfaces and/or wireless transmission interfaces. The wired transmission interfaces may include: high definition multimedia interface (HDMI), DisplayPort (DP) interface, embedded DisplayPort (eDP) interface, Universal Serial Bus (USB) interface, USB Type-C interface, Thunderbolt interface, digital video interface (DVI), video graphics array (VGA) interface, general purpose input/output (GPIO) interface, universal asynchronous receiver/transmitter (UART) interface, serial peripheral interface (SPI), inter-integrated circuit (I2C) interface, or a combination thereof. The wireless transmission interfaces may include Bluetooth, WiFi, near-field communication (NFC) interface, etc., but the invention is not limited thereto. The peripheral apparatus 160, for example, may include input apparatuses such as a keyboard, a mouse, a touch pad, etc., but the invention is not limited thereto.

For example, the storage device 140 may store one or more applications 141, an operating system 142 (e.g., Windows, Linux, MacOS, etc.), and a reporting program 143. The processing unit 110 may load the operating system 142, the reporting program 143, and one of the applications 141 to the memory unit 130 for execution. The operating system 142 may include a dynamic-link library (DLL) 1421 that has a function of sound collection and analysis, and the DLL 1421 is configured to collect the sound signal generated by the application or computer game executed by the processing unit 110 in the operating-system layer and analyze the sound information of the sound signal. The sound information, for example, may include the orientation and strength of the sound signal, and transmit the sound information obtained from the analysis to the reporting program 143 in the application layer. In some embodiments, the function of the DLL 1421 can be replaced by a sound-collecting program 144 which may be a third-party program.

The reporting program 143 may be a resident program that can transmit the sound information to the display controller 210 through the data-transmission channel between the host 100 and the display apparatus 200, so that the display controller 210 can perform a specific operation of the OSD menu corresponding to the sound information.

The display apparatus 200, for example, may be a flat panel display, a television, a projector, or a computer monitor, but the invention is not limited thereto. The display apparatus 200 includes a display controller 210, a display module 220, a storage unit 230, an image buffer 240, one or more transmission interface 250, and an input interface 260. The transmission interface 250 may include wired transmission interfaces and/or wireless transmission interfaces. The wired transmission interfaces may include: high definition multimedia interface (HDMI), DisplayPort (DP) interface, embedded DisplayPort (eDP) interface, low-voltage differential signaling (LVDS) interface, Universal Serial Bus (USB) interface, USB Type-C interface, Thunderbolt interface, digital video interface (DVI), video graphics array (VGA) interface, general purpose input/output (GPIO) interface, universal asynchronous receiver/transmitter (UART) interface, serial peripheral interface (SPI), inter-integrated circuit (I2C) interface, or a combination thereof. The wireless transmission interfaces may include Bluetooth, WiFi, near-field communication (NFC) interface, etc., but the invention is not limited thereto.

The display controller 210, for example, may be implemented by an application-specific integrated circuit (ASIC), a system-on-chip (SoC), a processor, or a microcontroller, but the invention is not limited thereto.

The display module 220, for example, may be a liquid-crystal display panel, a light-emitting diode (LED) display panel, an organic light-emitting diode (OLED) display panel, a cathode ray tube (CRT) display, an E-Ink display module, an electroluminescent display module, a plasma display module, a projection display module, or a quantum dot display module, but the invention is not limited thereto.

The storage unit 230, for example, may be a non-volatile memory such as a read-only memory (ROM), an erasable programmable read-only memory (EPROM), an electrically erasable programmable read-only memory (EEPROM), etc., but the invention is not limited thereto. The storage unit 230 is configured to store firmware 231 associated with the display apparatus 200. The storage unit 230 may be disposed outside the display controller 210, or alternatively integrated into the display controller 210.

The firmware 231, for example, may include extended display identification data (EDID) and display settings of the display apparatus 200, and one or more on-screen-display (OSD) interfaces 233. The EDID, for example, may include information such as the manufacturer, product name, resolution, frames per second (FPS) of the display apparatus 200. The display settings of the display apparatus 200 may include the brightness, contrast, sharpness, color temperature of the display apparatus 200. The firmware 232 is used to control the OSD interfaces 233 of the display apparatus 200.

In an embodiment, the display controller 210 may read the firmware 231 and 232 and program code of the OSD interface 233 stored in the storage unit 230 via a bus (e.g., an I2C bus), and configure the corresponding display parameters. In addition, the display controller 210 may transmit the EDID of the display apparatus 200 to the host 100 via one of the transmission interfaces 250 (e.g., may be an image-transmission channel or a data-transmission channel), so that the processing unit 110 and the graphics processing unit 120 in the host 100 may configure the resolution and corresponding synchronization signals of the output image signal based on the EDID. The OSD interfaces 233, for example, may include an OSD menu and corresponding options, an information dashboard, a timer, a counter, a crosshair, a specific symbol, a specific color, a specific text, or a combination thereof, but the invention is not limited thereto.

The image buffer 240, for example, may be a volatile memory (e.g., a DRAM) or a non-volatile memory (e.g., a flash memory), that is configured to store output images to be displayed on the display module 220, wherein the display controller 210 may, according to the sound information received from the host 100, overwrite one or more specific regions of the image signal stored in the image buffer 240 with the one or more OSD interfaces 232 to generate an output image.

The input interface 260 is configured to control the OSD menu of the display apparatus 200. The input interface 260 may be implemented by one or more physical buttons 261 or a five-way joystick 262 to implement instructions such as up, down, left, right, and confirm.

In an embodiment, when the user performs an operation in one direction of the five-way joystick 262 (or presses one of the physical buttons 261), the display controller 210 may read the firmware 232 and the program code or firmware of the OSD menu and corresponding options of the OSD interfaces 233 from the storage unit 230, and display the OSD menu and corresponding options on the display module 220. In an embodiment, the user may perform operations on the input interface 260 to control the OSD menu of the display apparatus 200 to adjust the brightness, contrast, sharpness, color temperature of the display module 220, or activate or deactivate other interfaces among the OSD interfaces 233. In another embodiment, the activating and deactivating of the OSD interfaces 233 and the content displayed on the OSD interface 233, for example, can be controlled by the peripheral device 160 of the host 100, where the details will be described later. For example, the firmware 231 can be regarded as the default firmware of the display apparatus 200, and the user may control the settings of the OSD interface 233 displayed on the display apparatus 200 via the five-way joystick 262 (or the physical buttons 261).

In an embodiment, the display controller 210 may include an image scalar 211 and a timing controller 212. The display controller 210 may receive the image signal from the host 100 and/or another signal from other hosts via one of the transmission interfaces 250, and the image scalar 211 may perform an image-scaling process and/or image-overlaying process on the received image signals to fit the resolution of the display module 220, and store the images (e.g., output images) generated by the image-scaling process to the image buffer 240. The timing controller 212 may control the display module 220 to read the output images from the image buffer 240 for displaying.

In another embodiment, the display controller 210 may include the timing controller 212, and the resolution of the image signal from the host 100 may fit that of the display module 220. Thus, the display controller 210 may directly store the received image signal from the host 100 to the image buffer 240 without performing the image-scaling process. The timing controller 212 may read the output images stored in the image buffer 240, and control the display module 220 to display the output images.

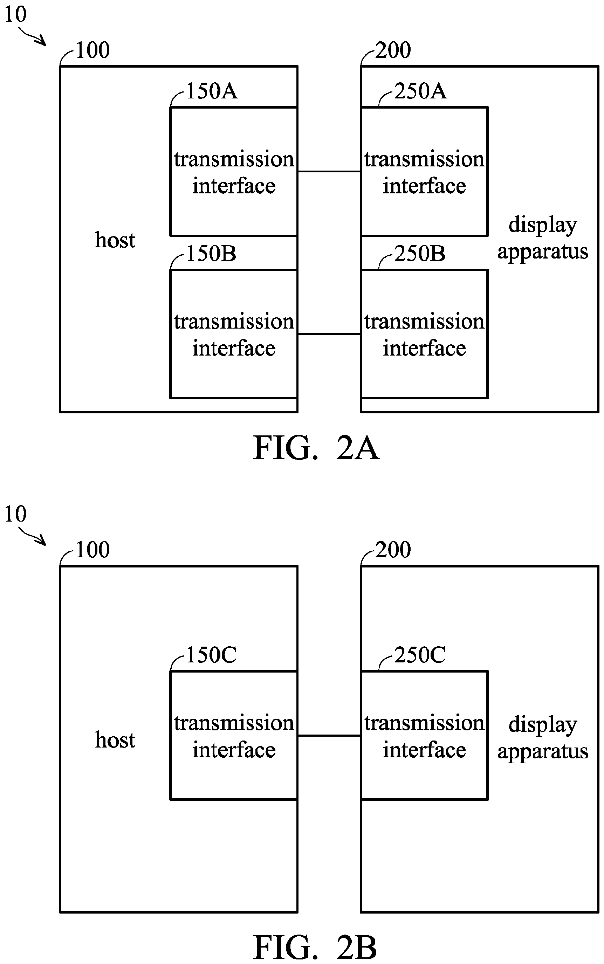

FIGs. 2A and 2B are diagrams of connection between the host and display apparatus in the electronic device in accordance with an embodiment of the invention.

In an embodiment, as depicted in FIG. 2A, the image signal generated by the graphics processing unit 120 of the host 100 may be transmitted to the display controller 210 of the display apparatus 200 via the transmission interface 150A (e.g., an HDMI interface) of the host 100 and the transmission interface 250A (e.g., an HDMI interface) of the display apparatus 200. For example, the transmission channel between the transmission interfaces 150A and 250A can be regarded as an image-transmission channel. The transmission channel between the interfaces 150B and 250B can be regarded as a data-transmission channel or control-signal transmission channel. In some embodiments, if the electronic device 10 is a laptop computer, the transmission interfaces 150A and 250A may be eDP interfaces or LVDS interfaces, and the transmission interfaces 150B and 250B may be internal-bus interfaces, I2C interfaces, or SPI interfaces, but the invention is not limited thereto.

In some other embodiments, as depicted in FIG. 2B, the image signal generated by the graphics processing unit 120 of the host 100 can be transmitted to the display controller 210 of the display apparatus 200 via the transmission interface 150C (e.g., a USB Type-C interface) of the host 100 and the corresponding transmission interface 250C (e.g., a USB Type-C interface) of the display apparatus 200.

It should be noted that the USB Type-C protocol may support Hi-Speed and SuperSpeed data transmission in addition to the image/video transmission (e.g., supporting the DisplayPort or HDMI standards). That is, the image-transmission channel and the data-transmission channel can be integrated into the USB Type-C interface. Accordingly, the host 100 may transmit the sound information to the display apparatus 200 via the transmission interface 150C (e.g., a USB Type-C interface) of the host 100 and the corresponding transmission interface 250C (e.g., a USB Type-C interface) of the display apparatus 200. In addition, the processing unit 110 of the host 100 may detect a specific event on the host 100, and generate an OSD control signal in response to the detected specific event. For example, the specific event may be a specific input signal received by one of the peripheral apparatuses 160 of the host 100, such as a specific button or a combination of buttons input from the keyboard, and each of the OSD interfaces 232 of different types may correspond to a respective specific button or combination of buttons.

For convenience of description, the following embodiments are described with the hardware configuration shown in FIG. 2A, but can also be implemented by the hardware configuration shown in FIG. 2B in a similar manner. In an embodiment, the user may press a specific combination of buttons (e.g., CTRL+ALT+4 or CTRL+ALT+5, but not limited) on the keyboard to activate the radar interface or acoustic-orientation interface of the OSD interface 233 of the display apparatus 200.

For example, after the display controller 210 has received the OSD control signal representing the specific key combination from the host 100, the display controller 210 may read the OSD interface 233 (e.g., radar interface or acoustic-orientation interface) from the storage unit 230, and the overwrite a specific area of the image signal stored in the buffer 240 with the OSD interface 233. The OSD interface is displayed at the topmost layer among the image layers (e.g., image signals from different hosts) of the display apparatus 200 and the image displayed on the display module 220 by the display controller 210 is the content stored in the image buffer 240. Thus, when the user uses the specific key combination to activate the radar interface or acoustic-orientation interface of the OSD interface 233, no matter what application the host 100 executes and what kind of image it plays, the user can view the radar interface or the acoustic-orientation interface on the display apparatus 200.

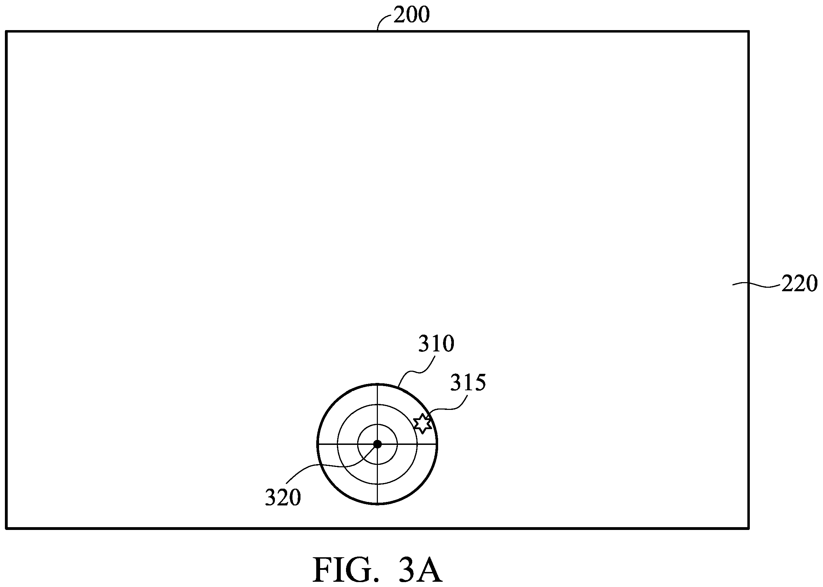

FIG. 3A is a diagram of an OSD interface in accordance with an embodiment of the invention.

In an embodiment, the user may press a specific key combination (e.g., CTRL+ALT+4, but not limited) to activate or deactivate the radar interface 310 of the OSD interface 233 of the display apparatus 200, as depicted in FIG. 3A. For example, after the display controller 210 has received the OSD control signal representing the specific key combination from the host 100, the display controller 210 may read the radar interface 310 of the OSD interface 233 from the storage unit 230, and overwrite the specific area of the image signal stored in the image buffer 240 with the radar interface 310, wherein the center 320 of the radar interface 310 may represent the current location of the player in the radar interface 310. Accordingly, the user may view the radar interface 310 on the display image displayed by the display apparatus 200.

In addition, after the display controller 210 has received the sound information from the host 100, the display controller 210 may obtain the orientation, distance, and strength of the sound signal generated by the application or computer game currently executed by the host 100. The display controller 210 may convert the orientation, distance, and strength of the sound signal into corresponding coordinates and size of the sound-positioning point 315 in the radar interface 310, and read the pattern of the corresponding sound-positioning point 315 from the firmware 232 of the storage unit 230, and overwrite the position of the corresponding coordinates (e.g., the relative position in the radar interface 310) of the image signal stored in the image buffer 240 with the pattern of the sound-positioning point 315. For example, if the strength of the sound signal is greater, the pattern of the sound-positioning point 315 is larger or darker. If the strength of the sound signal is smaller, the pattern of the sound-positioning point 315 is smaller or lighter. In addition, the pattern of the sound-positioning point 315 is not limited to the star shape shown in FIG. 3A, and other suitable patterns may be used instead.

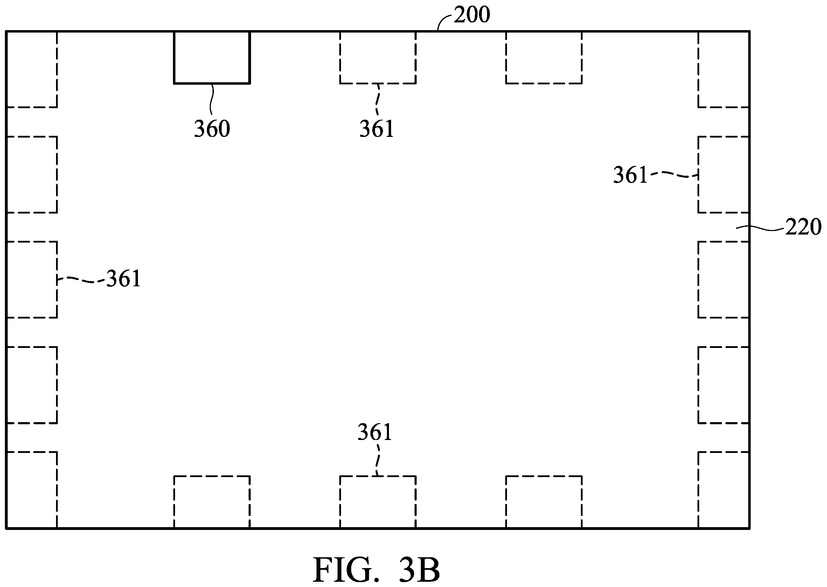

FIG. 3B is a diagram of an OSD interface in accordance with another embodiment of the invention.

In another embodiment, the user may press a specific key combination (e.g., CTRL+ALT+5, but not limited) to activate or deactivate the acoustic-orientation interface of the OSD interface 233 of the display apparatus 200. For example, after the display controller 210 has received the OSD control signal representing the specific key combination from the host 100, the display controller 210 may read orientation symbols of the acoustic-orientation interface of the OSD interface 233 from the storage unit 230, such as the orientation symbols 360 and 361 shown in FIG. 3B, where the orientation symbols 360 and 361 can be regarded as OSD patterns.

Specifically, after the display controller 210 has received the sound information from the host 100, the display controller 210 may obtain the orientation, distance, and strength of the sound signal generated by the application or computer game currently executed by the host 100. The display controller 210 may convert the orientation, distance, and strength of the sound signal into corresponding orientation and size of the orientation symbol to be displayed on the display module 220. The display controller 210 may read the pattern of the orientation symbols 360 and 361 from the firmware 232 of the storage unit 230, and overwrite the edge position (e.g., around the inner edge of the display module 220) of the image signal corresponding to the orientation stored in the image buffer 240 with the pattern of the orientation symbols 360 and 361. The orientation symbol 360 of the solid line portion may indicate the orientation of the determined sound signal, such as about at a 25-degree angle in the northwest, and the orientation symbol 361 of the dotted line portion may indicate the preset and unused orientation symbol. In an embodiment, the orientation symbols 360 and 361 can be replaced by other specific symbols, specific colors, or specific texts. In addition, if the strength of the sound signal is greater, the pattern of the orientation symbol 360 is larger or darker. If the strength of the sound signal is smaller, the pattern of the orientation symbol 360 is smaller or lighter.

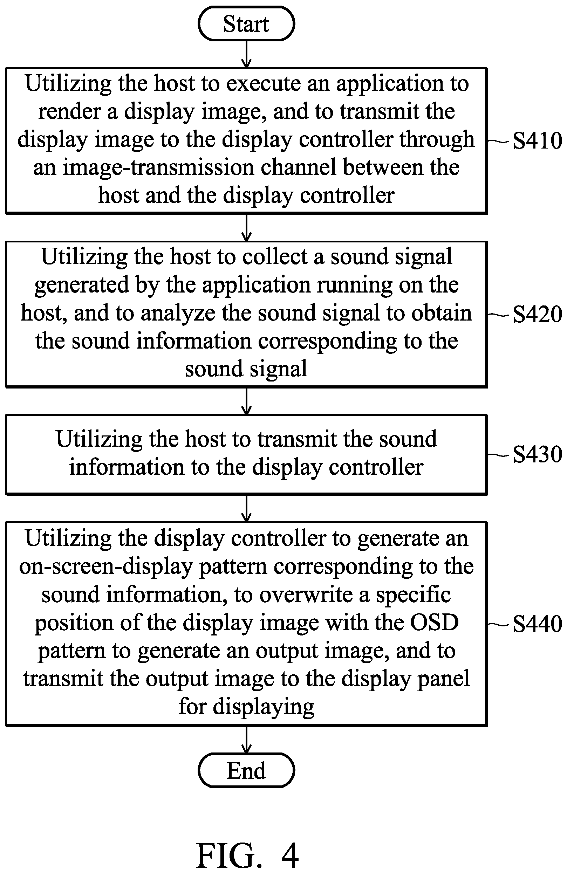

FIG. 4 is a flow chart of a display method of an OSD interface in accordance with an embodiment of the invention.

In step S410, the host 100 executes an application to render a display image, and transmits the display image to the display controller 210 through an image-transmission channel between the host 100 and the display controller 210. For example, the host 100 may transmit the image signal of the display image to the display apparatus through the image-transmission channel, wherein the connections of the data-transmission channel and image-transmission channel can be referred to the embodiments of FIGs. 2A and 2B.

In step S420, the host 100 collects a sound signal generated by the application executed by the host 100, and analyzes the sound signal to obtain sound information corresponding to the sound signal. For example, the sound information may include the orientation, distance, and strength of the sound signal.

In step S430, the host 100 transmits the sound information to the display controller 210. For example, the host 100 may transmit the sound information to the display apparatus 200 through the data-transmission channel between the host 100 and the display apparatus 200, wherein the connections of the data-transmission channel and image-transmission channel can be referred to the embodiments of FIGs. 2A and 2B.

In step S440, the display controller 210 generates an OSD pattern corresponding to the sound information according to the received sound information, overwrites a specific position of the display image with the OSD pattern to generate an output image, and transmits the output image to the display module 220 for displaying. For example, the OSD pattern may be the acoustic-positioning point 315 in the embodiment of FIG. 3A or the orientation symbols 360 or 361 in the embodiment of FIG. 3B, but the invention is not limited thereto. In addition, the specific position may be the relative position of the sound signal in the radar interface 310, or the relative position of the sound signal in the display module 220.

In view of the above, an electronic device and a display method of an OSD interface are provided. The electronic device and the display method are capable utilizing the dynamic-link library or sound-collecting application executed by the host to collect sound signal generated by the application running on the host, to analyze the sound information of the sound signal, and to transmit the sound information to the display controller through the data-transmission channel. The display controller may obtain the OSD pattern corresponding to the sound information and overwrite the specific position of the display image with the OSD pattern, thereby utilizing the OSD interface of the display apparatus to display the orientation, distance, and strength of the sound signal from the host. Accordingly, the user can obtain the information of the sound signal from the display apparatus without the restrictions of the operating system and the application/computer game executed by the host for determining the sound information of the sound signal, thereby increasing the user experience.

The use of terms such as "first", "second", and "third" in claims is used to modify elements in the claims, and is not used to indicate that there is a priority order, antecedent relationship, or is an element preceded by another element, or a chronological order when performing a method step, only used to distinguish elements with the same name.

While the invention has been described by way of example and in terms of the preferred embodiments, it should be understood that the invention is not limited to the disclosed embodiments. On the contrary, it is intended to cover various modifications and similar arrangements as would be apparent to those skilled in the art. Therefore, the scope of the appended claims should be accorded the broadest interpretation so as to encompass all such modifications and similar arrangements.

## Claims

1. An electronic device, comprising:
a display module;
a display controller, configured to control displaying of the display module; and
a host, electrically connected to the display controller;
wherein the host executes an application to render a display image, and transmits the display image to the display controller through an image-transmission channel between the host and the display controller,
wherein the host collects a sound signal generated by the application running on the host, and analyzes the sound signal to obtain sound information corresponding to the sound signal,
wherein the host transmits the sound information to the display controller, and the display controller generates an on-screen-display (OSD) pattern corresponding to the sound information, overwrites a specific position of the display image with the OSD pattern to generate an output image, and transmits the output image to the display module for displaying.

2. The electronic device as claimed in claim 1, wherein the sound information comprises an orientation, distance, and strength of the sound signal.

3. The electronic device as claimed in claim 1 or 2, wherein the OSD pattern is located within a radar interface of an OSD interface of the display module.

4. The electronic device as claimed in claim 1 or 2, wherein the OSD pattern is located around the inner edge of the display module.

5. The electronic device as claimed in any of claims 1 to 4, wherein an operating system executed by the host comprises a dynamic-link library that is configured to collect the sound signal generated by the application executed by the host, and to analyze the sound signal to obtain the sound information corresponding to the sound signal.

6. The electronic device as claimed in any of claims 1 to 5, wherein the host executes a sound-collecting program and a reporting program, and the sound-collecting program is configured to collect the sound signal generated by the application executed by the host, and to analyze the sound signal to obtain the sound information corresponding to the sound signal, wherein the reporting program transmits the sound information generated by the sound-collecting program to the display controller through a data-transmission channel between the host and the display controller.

7. The electronic device as claimed in claim 3, wherein the display controller converts the orientation, distance, and strength of the sound signal into corresponding coordinates and size of an acoustic-positioning point in the radar interface, reads the OSD pattern of the acoustic-positioning point from firmware stored in a storage unit of the electronic device, and overwrites a position of the corresponding coordinates of the radar interface in the display image with the OSD pattern.

8. A display method of an on-screen-display (OSD) interface, for use in an electronic device, wherein the electronic device comprises a display module, a display controller, and a host, the display method comprising:
utilizing the host to execute an application to render a display image, and to transmit the display image to the display controller through an image-transmission channel between the host and the display controller;
utilizing the host to collect a sound signal generated by the application running on the host, and to analyze the sound signal to obtain sound information corresponding to the sound signal;
utilizing the host to transmit the sound information to the display controller; and
utilizing the display controller to generate an on-screen-display pattern corresponding to the sound information, to overwrite a specific position of the display image with the OSD pattern to generate an output image, and to transmit the output image to the display module for displaying.

9. The display method as claimed in claim 8, wherein the sound information comprises an orientation, distance, and strength of the sound signal.

10. The display method as claimed in claim 8 or 9, wherein the OSD pattern is located within a radar interface of an OSD interface of the display module.

11. The display method as claimed in claim 8 or 9, wherein the OSD pattern is located around the inner edge of the display module.

12. The display method as claimed in any of claims 8 to 11, wherein an operating system executed by the host comprises a dynamic-link library that is configured to collect the sound signal generated by the application executed by the host, and to analyze the sound signal to obtain the sound information corresponding to the sound signal.

13. The display method as claimed in any of claims 8 to 12, further comprising:
utilizing the host to execute a sound-collecting program and a reporting program,
wherein the sound-collecting program is configured to collect the sound signal generated by the application executed by the host, and to analyze the sound signal to obtain the sound information corresponding to the sound signal,
wherein the reporting program transmits the sound information generated by the sound-collecting program to the display controller through a data-transmission channel between the host and the display controller.

14. The display method as claimed in claim 10, further comprising:
utilizing the display controller to convert the orientation, distance, and strength of the sound signal into corresponding coordinates and size of an acoustic-positioning point in the radar interface, to read the OSD pattern of the acoustic-positioning point from firmware stored in a storage unit of the electronic device, and to overwrite a position of the corresponding coordinates of the radar interface in the display image with the OSD pattern.
